# EUROPEAN PATENT APPLICATION

(11) **EP 1 207 698 A2**
(43) Date of publication of application: **22.05.2002**
(21) Application number: 01309564.1
(22) Date of filing: 13.11.2001
(51) Int. Cl.: H04N 7/16, H04N 5/44

(54) **Program reception apparatus**

(30) Priority: 15.11.2000 JP 2000347781
(71) Applicant: MATSUSHITA ELECTRIC INDUSTRIAL CO., LTD., Kadoma-shi, Osaka 571-8501 (JP)
(72) Inventor: Tsujimura, Satoshi, Kobe-shi, Hyogo-ken 658-0082 (JP); Muikaichi, Masahiro, Katano-shi, Osaka-fu 576-0021 (JP); Yoshi, Taketo, Amagasaki-shi, Hyogo-ken 661-0024 (JP); Izumi, Kenji, Kadoma-shi, Osaka-fu 571-0065 (JP); Sekiguchi, Takuya, Katano-shi, Osaka-fu 576-0041 (JP)
(74) Representative: Crawford, Andrew Birkby

(57) **Abstract**

A program reception apparatus (10) is provided. A first receiving unit (11) receives a program sent via a first transmission path to a receiver group made up of a plurality of program reception apparatuses. A second receiving unit (12) receives a program sent via a second transmission path different with the first transmission path to a part of the receiver group. A controlling unit (13) controls so that one of the first and second receiving unit receives a program at one time. When the program received under the control of the controlling unit is accompanied with switch information for specifying a program to be received by the other receiving unit, an extracting unit (14) extracts the switch information. When the switch information is extracted by the extracting unit, a switching unit (16) switches reception to the program specified by the switch information.

## Description

This application is based on application No. 2000-347781 filed in Japan, the contents of which are hereby incorporated by reference.

### BACKGROUND OF THE INVENTION

### Field of the Invention

The present invention relates to a program reception apparatus represented by a television receiver. The invention in particular relates to reception control techniques for selectively receiving broadcast programs, such as satellite broadcasts, which cover a wide geographical area and broadcast programs, such as terrestrial broadcasts, which cover only a part of the wide geographical area.

### Prior Art

In today's analog terrestrial broadcasting, each earth station broadcasts a mixture of national programs which are originated from a key station and local commercials or news which are targeted to a limited geographical area covered by the earth station.

On the other hand, satellite broadcasting covers a wide geographical area and typically broadcasts only national programs.

In Japan, digital satellite broadcasting began at the end of 2000. Also, digital terrestrial broadcasting will be launched from 2003. These digital broadcast services conform to the MPEG (Moving Picture Experts Group) standards.

In digital broadcasting, data such as control data and text data which are used for various broadcast services can be multiplexed with data of ordinary programs or commercials.

Terrestrial broadcasting is suited to broadcast different programs to different geographical areas. However, when broadcasting a national program, each earth station has to receive the national program from the key station via dedicated lines or the like and rebroadcast it according to the earth station's own broadcast system. This decreases efficiency. Besides, the airing of the program may be delayed for several weeks in some areas.

Satellite broadcasting is suited to broadcast national programs. Unlike analog terrestrial broadcasting, however, it is fundamentally impossible to mix national programs with local commercials or news by satellite broadcasting.

To overcome these problems, Japanese Laid-Open Patent Application No. H11-17633 (Sony Corporation) discloses an advertisement information broadcast method, an advertisement information broadcast system, and a receiver.

According to this technique, the satellite broadcaster attaches different target IDs to different sets of advertisement information, and multiplexes these sets of advertisement information with data of a satellite broadcast program, before broadcasting them. The receiver compares each target ID multiplexed in the program data with the viewer's or receiver terminal's target ID stored beforehand, and reproduces a set of advertisement information corresponding to a target ID which matches the viewer's or receiver terminal's target ID. In this way, different advertisements can be reproduced for different viewers or receiver terminals.

According to this technique, however, all sets of advertisement information corresponding to the different target IDs need to be multiplexed with the program data and broadcast simultaneously. This causes the problem of the frequency band being momentarily widened.

To avoid such momentary widening of the frequency band, the aforementioned patent application also proposes a method whereby the broadcaster multiplexes each set of advertisement information with the program data at different timing and broadcasts them beforehand, and the receiver stores these sets of advertisement information and later reproduces the corresponding set of advertisement information.

However, this method requires the receiver to be equipped with a memory device which is capable of storing the sets of advertisement information. This causes manufacturing costs to increase.

### SUMMARY OF THE INVENTION

In view of the above problems, the present invention aims to provide a program reception apparatus, program reception method, and computer-readable recording medium recording a program reception program, whereby a mixture of national programs and local programs can be easily received with no need to momentarily widen a frequency band or to employ a memory device for storing advertisement information.

The stated object can be achieved by a program reception apparatus for receiving and reproducing programs, including: a first receiving unit for receiving programs which are sent via a first transmission path to a receiver group made up of a plurality of program reception apparatuses; a second receiving unit for receiving programs which are sent via a second transmission path different with the first transmission path to a part of the receiver group, wherein a program received by at least one of the first and second receiving units is accompanied, at a predetermined timing, with switch information for specifying a program to be received by a different one of the first and second receiving units; a controlling unit for controlling reception so that one of the first and second receiving units receives a program at one time, the program hereafter referred to as a first program; and an extracting unit for extracting, when the first program is accompanied with the switch information, the switch information, wherein the controlling unit includes: a switching unit for switching, when the switch information is extracted by the extracting unit, the reception from the first program to a second program specified by the extracted switch information.

According to this construction, the reception can be automatically switched between the programs transmitted via the different transmission paths. This enables viewers to receive a mixture of a national program broadcast by satellite broadcasting and a local commercial or news broadcast by terrestrial broadcasting. This also enables viewers to receive a mixture of a common program broadcast by satellite or terrestrial broadcasting and an individually-chosen commercial or news sent by internet broadcasting.

In other words, it is possible to receive a mixture of a national program and a local or individually-chosen program, with not need to momentarily widen a frequency band or to employ a memory device for storing advertisement information.

Here, the controlling unit may further include: an acquiring unit for acquiring return information for specifying the first program, before the reception is switched from the first program to the second program; and a returning unit for switching, when the received second program is accompanied with a return signal, the reception from the second program back to the first program specified by the return information.

According to this construction, when triggered the program reception apparatus returns to receiving the first program according to the return information. This simplifies the processing.

Here, the controlling unit may further include: an acquiring unit for acquiring return information for specifying the first program, before the reception is switched from the first program to the second program; a counting unit for counting a predetermined time which elapses since the reception is switched from the first program to the second program; and a returning unit for switching, when the predetermined time has elapsed, the reception from the second program back to the first program specified by the return information.

According to this construction, the trigger for returning to the first program is not necessary, since the reception is switched back to the first program once the predetermined time is counted. This allows viewers to receive some part of a program.

Here, the switch information may include a return time which is a time period from when the reception is switched from the first program to the second program to when the reception is switched from the second program back to the first program, wherein the controlling unit further includes: an acquiring unit for acquiring return information for specifying the first program, before the reception is switched from the first program to the second program; a counting unit for counting the return time which elapses since the reception is switched from the first program to the second program; and a returning unit for switching, when the return time has elapsed, the reception from the second program back to the first program specified by the return information.

According to this construction, the broadcaster of the first program can control the timing with which the reception is returned back to the first program, by setting the return time.

Here, the first receiving unit may receive a program which is broadcast to the plurality of program reception apparatuses located in a predetermined geographical area, wherein the second receiving unit receives a program which is broadcast to at least one of the plurality of program reception apparatuses located in a part of the predetermined geographical area.

According to this construction, the reception can be automatically switched between the programs which are broadcast to the geographical areas of different ranges. This enables viewers to receive a mixture of a national program broadcast by satellite broadcasting and a local commercial or news broadcast by terrestrial broadcasting.

Here, the first receiving unit may receive a satellite broadcast program, wherein the second receiving unit receives a non-satellite broadcast program.

According to this construction, one or both of the broadcasters can control the switching between the satellite broadcast and the non-satellite broadcast.

Here, the switching unit may switch the reception from the satellite broadcast program to the non-satellite broadcast program.

According to this construction, the satellite broadcaster can control the switching from the satellite broadcast to the non-satellite broadcast.

Here, the first receiving unit may receive a main program which is broadcast across the predetermined geographical area, wherein the second receiving unit receives a commercial or news which is broadcast to only the part of the predetermined geographical area.

According to this construction, one or both of the broadcasters can control the switching between the national program and the local commercial or news.

Here, the switching unit may switch the reception from the main program to the commercial or news.

According to this construction, the broadcaster of the national program can control the switching from the national program to the local commercial or news.

Here, the controlling unit may control the first receiving unit to receive the first program which is accompanied with the switch information, the switch information including pairs of transmitter information and characteristics information which are in a one-to-one correspondence with the programs that can be received by the second receiving unit, the transmitter information showing a transmitter of a program, and the characteristics information showing characteristics of users or program reception apparatuses that should receive the program, wherein the extracting unit extracts the switch information accompanying the first program, and the switching unit includes: a characteristics information storing unit for storing characteristics information showing characteristics of the program reception apparatus or a user of the program reception apparatus; a transmitter specifying unit for specifying a transmitter, based on transmitter information which is paired with characteristics information, among the pairs of transmitter information and characteristics information included in the extracted switch information, that matches the characteristics information stored in the characteristics information storing unit; and a switch executing unit for instructing the first receiving unit to stop receiving the first program, and instructing the second receiving unit to receive a program from the specified transmitter as the second program.

According to this construction, the reception can be automatically switched to the program that matches the characteristics of the viewer or the program reception apparatus, by specifying the transmitter using the characteristics information. This enables viewers to receive a mixture of a common program broadcast by satellite or terrestrial broadcasting and an individually-chosen commercial or news sent by internet broadcasting.

Here, the first receiving unit may receive a television program which is broadcast one-sidedly to unspecified program reception apparatuses, wherein the second receiving unit receives an internet program which is transmitted to only program reception apparatuses which have requested the internet program.

According to this construction, one or both of the broadcasters can control the switching between the television program and the internet program.

Here, the switching unit may switch the reception from the television program to the internet program.

According to this construction, the television broadcaster can control the switching from the television program to the internet program.

Here, the first receiving unit may receive a main program which is broadcast across a predetermined geographical area, wherein the second receiving unit receives a commercial or news which is broadcast to only a part of the predetermined geographical area.

According to this construction, one or both of the broadcasters can control the switching between the national program and the local commercial or news.

Here, the switching unit may switch the reception from the main program to the commercial or news.

According to this construction, the broadcaster of the national program can control the switching from the national program to the local commercial or news.

The stated object can also be achieved by a method used in a program reception apparatus for receiving and reproducing programs, including: a first receiving step for receiving programs which are sent via a first transmission path to a receiver group made up of a plurality of program reception apparatuses; a second receiving step for receiving programs which are sent via a second transmission path different with the first transmission path to a part of the receiver group, wherein a program received by at least one of the first and second receiving steps is accompanied, at a predetermined timing, with switch information for specifying a program to be received by a different one of the first and second receiving steps; a controlling step for controlling reception so that one of the first and second receiving steps receives a program at one time, the program hereafter referred to as a first program; and an extracting step for extracting, when the first program is accompanied with the switch information, the switch information, wherein the controlling step includes: a switching step for switching, when the switch information is extracted by the extracting step, the reception from the first program to a second program specified by the extracted switch information.

According to this construction, the reception can be automatically switched between the programs transmitted via the different transmission paths. This enables viewers to receive a mixture of a national program broadcast by satellite broadcasting and a local commercial or news broadcast by terrestrial broadcasting. This also enables viewers to receive a mixture of a common program broadcast by satellite or terrestrial broadcasting and an individually-chosen commercial or news sent by internet broadcasting.

In other words, it is possible to receive a mixture of a national program and a local or individually-chosen program, with not need to momentarily widen a frequency band or to employ a memory device for storing advertisement information.

The stated object can also be achieved by a computer program used in a program reception apparatus for receiving and reproducing programs, including: a first receiving step for receiving programs which are sent via a first transmission path to a receiver group made up of a plurality of program reception apparatuses; a second receiving step for receiving programs which are sent via a second transmission path different with the first transmission path to a part of the receiver group, wherein a program received by at least one of the first and second receiving steps is accompanied, at a predetermined timing, with switch information for specifying a program to be received by a different one of the first and second receiving steps; a controlling step for controlling reception so that one of the first and second receiving steps receives a program at one time, the program hereafter referred to as a first program; and an extracting step for extracting, when the first program is accompanied with the switch information, the switch information, wherein the controlling step includes : a switching step for switching, when the switch information is extracted by the extracting step, the reception from the first program to a second program specified by the extracted switch information.

According to this construction, the reception can be automatically switched between the programs transmitted via the different transmission paths. This enables viewers to receive a mixture of a national program broadcast by satellite broadcasting and a local commercial or news broadcast by terrestrial broadcasting. This also enables viewers to receive a mixture of a common program broadcast by satellite or terrestrial broadcasting and an individually-chosen commercial or news sent by internet broadcasting.

In other words, it is possible to receive a mixture of a national program and a local or individually-chosen program, with not need to momentarily widen a frequency band or to employ a memory device for storing advertisement information.

### BRIEF DESCRIPTION OF THE DRAWINGS

These and other objects, advantages and features of the invention will become apparent from the following description thereof taken in conjunction with the accompanying drawings which illustrate specific embodiments of the invention.

In the drawings:
FIG. 1 is a diagrammatic sketch of a digital broadcast reception apparatus to which the first embodiment of the invention relates;
FIG. 2 is a flowchart showing a reception operation of the digital broadcast reception apparatus shown in FIG. 1;
FIG. 3 is a diagrammatic sketch of a digital broadcast reception apparatus to which the second embodiment of the invention relates;
FIG. 4 is a flowchart showing a reception operation of the digital broadcast reception apparatus shown in FIG. 3;
FIG. 5 is a diagrammatic sketch of a digital broadcast reception apparatus to which the third embodiment of the invention relates;
FIG. 6 is a flowchart showing a reception operation of the digital broadcast reception apparatus shown in FIG. 5;
FIG. 7 is a diagrammatic sketch of a digital broadcast reception apparatus to which the fourth embodiment of the invention relates;
FIG. 8 is a diagrammatic sketch of a digital broadcast reception apparatus to which the fifth embodiment of the invention relates; and
FIG. 9 is a diagrammatic sketch of a digital broadcast reception apparatus to which the sixth embodiment of the invention relates.

### DESCRIPTION OF THE PREFERRED EMBODIMENTS

### First Embodiment

### (Overview)

The first embodiment of the present invention is the following. When a digital satellite broadcast station broadcasting a digital satellite program wants a receiver to receive a digital terrestrial program such as local commercials or news at some midpoint of the digital satellite program, the digital satellite broadcast station multiplexes selection data for selecting the digital terrestrial program with program data of the digital satellite program and broadcasts them. When the digital terrestrial program ends, a digital terrestrial broadcast station broadcasting the digital terrestrial program multiplexes selection data for selecting the digital satellite program with program data of the digital terrestrial program and broadcasts them. Upon receipt of the selection data for the digital terrestrial program while receiving the digital satellite program, the receiver switches the reception according to this selection data and receives the digital terrestrial program. Also, upon receipt of the selection data for the digital satellite program while receiving the digital terrestrial program, the receiver switches the reception according to this selection data and resumes receiving the digital satellite program.

### (Construction of a Digital Broadcast Reception Apparatus)

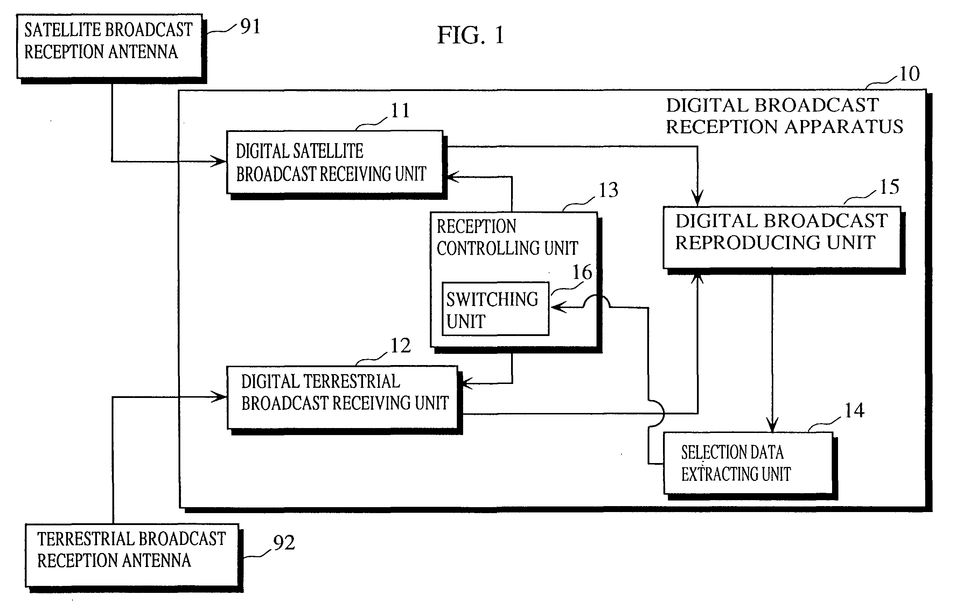

FIG. 1 is a diagrammatic sketch of a digital broadcast reception apparatus to which the first embodiment of the invention relates.

In the drawing, a digital broadcast reception apparatus 10 includes a digital satellite broadcast receiving unit 11, a digital terrestrial broadcast receiving unit 12, a reception controlling unit 13, a selection data extracting unit 14, and a digital broadcast reproducing unit 15.

The drawing also shows a satellite broadcast reception antenna 91 for receiving carrier waves of satellite broadcasts, and a terrestrial broadcast reception antenna 92 for receiving carrier waves of terrestrial broadcasts.

The digital satellite broadcast receiving unit 11 receives program data of a digital satellite program and control data multiplexed with the program data. In more detail, the digital satellite broadcast receiving unit 11 includes a tuner which selects a carrier wave of the digital satellite program and a demodulator which demodulates the carrier wave to recover an original signal wave. The digital satellite broadcast receiving unit 11 generates a transport stream that is made up of packets of the program and control data of the digital satellite program.

The digital terrestrial broadcast receiving unit 12 receives program data of a digital terrestrial program and control data multiplexed with the program data. In more detail, the digital terrestrial broadcast receiving unit 12 includes a tuner which selects a carrier wave of the digital terrestrial program and a demodulator which demodulates the carrier wave to recover an original signal wave. The digital terrestrial broadcast receiving unit 12 generates a transport stream that is made up of packets of the program and control data of the digital terrestrial program.

The reception controlling unit 13 exercises control so that only one of the digital satellite broadcast receiving unit 11 and the digital terrestrial broadcast receiving unit 12 receives program data and control data. The reception controlling unit 13 includes a switching unit 16.

The selection data extracting unit 14 performs the following operation. When selection data for selecting another program is included in control data reproduced by the digital broadcast reproducing unit 15, the selection data extracting unit 14 extracts the selection data. As examples, the selection data is a Network Information Table (NIT) which includes the program to be selected, a transponder number, and a packet identifier (PID) of a Program Map Table (PMT) of the program to be selected.

The digital broadcast reproducing unit 15 reproduces a program, using the program data which is received by either the digital satellite broadcast receiving unit 11 or the digital terrestrial broadcast receiving unit 12 under the control of the reception controlling unit 13. The digital broadcast reproducing unit 15 also reproduces the control data multiplexed with the program data. In detail, the digital broadcast reproducing unit 15 is equipped with a TS decoder and an audio-visual decoder. The TS decoder decodes a transport stream to reproduce audio and video MPEG streams and control data. The audio-visual decoder decodes the audio and video MPEG streams to reproduce audio and video.

The switching unit 16 controls the digital satellite broadcast receiving unit 11 and the digital terrestrial broadcast receiving unit 12 to switch the reception from the program and control data which is currently being received to the program and control data specified by the selection data extracted by the selection data extracting unit 14.

### (Reception Operation)

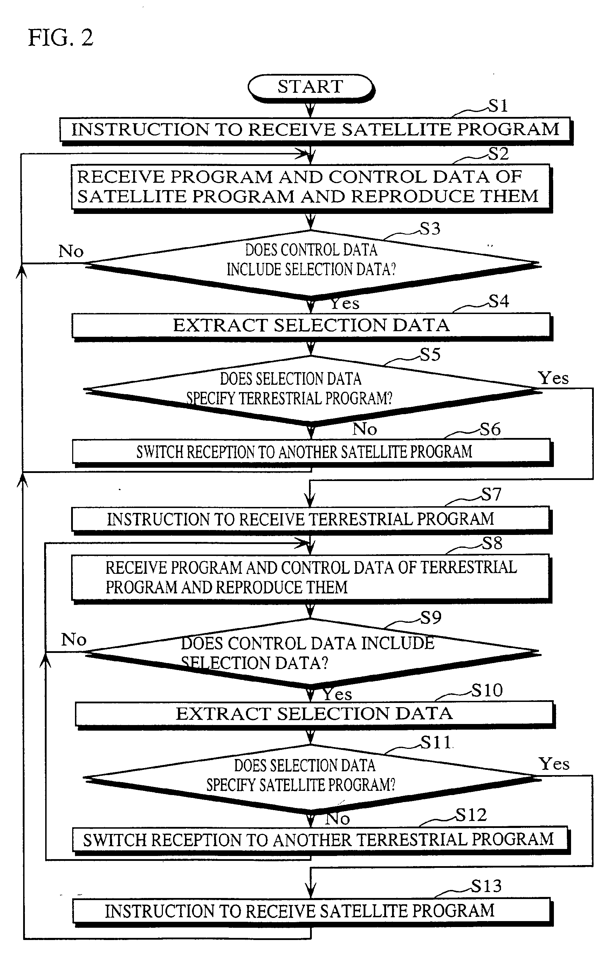

FIG. 2 is a flowchart showing a reception operation of the digital broadcast reception apparatus 10.

This reception operation is performed as follows.

Here, it is assumed that when a digital satellite broadcast station wants the digital broadcast reception apparatus 10 to receive a digital terrestrial program such as local commercials or news while broadcasting a digital satellite program such as a national program, the digital satellite broadcast station multiplexes selection data for the digital terrestrial program with program data of the digital satellite program and broadcasts them. Also, when the digital terrestrial program ends, a digital terrestrial broadcast station broadcasting the digital terrestrial program multiplexes selection data for the digital satellite program with program data of the digital terrestrial program and broadcasts them.
(1) When the viewer selects a digital satellite program using a remote control or the like, the reception controlling unit 13 instructs the digital satellite broadcast receiving unit 11 to receive program data and control data of the digital satellite program (S1).
(2) The digital satellite broadcast receiving unit 11 receives the program data of the digital satellite program and the control data multiplexed with the program data. The digital broadcast reproducing unit 15 reproduces the digital satellite program, such as a national program, using the program data. The digital broadcast reproducing unit 15 also reproduces the control data (S2).
(3) The selection data extracting unit 14 judges whether selection data for receiving another program is included in the reproduced control data (S3). If not, the reception of the digital satellite program continues.
(4) If selection data is included, the selection data extracting unit 14 extracts the selection data (S4).
(5) A judgement is made whether the program specified by the extracted selection data is a digital satellite program or a digital terrestrial program (S5).
(6) In the case of a digital satellite program, the reception is switched to the digital satellite program specified by the selection data (S6).
(7) In the case of a digital terrestrial program, the switching unit 16 instructs the digital satellite broadcast receiving unit 11 to stop receiving the digital satellite program, and instructs the digital terrestrial broadcast receiving unit 12 to receive the digital terrestrial program specified by the selection data (S7).
(8) The digital terrestrial broadcast receiving unit 12 receives program data of the digital terrestrial program and control data multiplexed with the program data. The digital broadcast reproducing unit 15 reproduces the digital terrestrial program, such as local commercials or news, using the program data. The digital broadcast reproducing unit 15 also reproduces the control data (S8).
(9) The selection data extracting unit 14 judges whether selection data for receiving another program is included in the reproduced control data (S9). If not, the reception of the digital terrestrial program continues.
(10) If selection data is included, the selection data extracting unit 14 extracts the selection data (S10).
(11) A judgement is made whether the program specified by the extracted selection data is a digital satellite program or a digital terrestrial program (S11).
(12) In the case of a digital terrestrial program, the reception is switched to the digital terrestrial program specified by the selection data (S12).
(13) In the case of a digital satellite program, the switching unit 16 instructs the digital terrestrial broadcast receiving unit 12 to stop receiving the digital terrestrial program, and instructs the digital satellite broadcast receiving unit 11 to receive the digital satellite program specified by the selection data (S13).

### (Conclusion)

According to the first embodiment of the invention, the reception can be freely switched from a digital satellite program to a digital terrestrial program and vice versa, by receiving selection data. This makes it possible to receive national programs from digital satellite broadcasting and also receive local commercials or news from digital terrestrial broadcasting.

### Second Embodiment

### (Overview)

The second embodiment of the present invention is the following. When a digital satellite broadcast station broadcasting a digital satellite program wants a receiver to receive a digital terrestrial program such as local commercials or news at some midpoint of the digital satellite program, the digital satellite broadcast station multiplexes selection data for the digital terrestrial program with program data of the digital satellite program and broadcasts them. When the digital terrestrial program ends, a digital terrestrial broadcast station broadcasting the digital terrestrial program multiplexes completion notification data with program data of the digital terrestrial program and broadcasts them. Upon receiving the selection data for the digital terrestrial program while receiving the digital satellite program, the receiver stores return information for returning to the digital satellite program, before switching the reception according to the selection data and receiving the digital terrestrial program. Upon receiving the completion notification data while receiving the digital terrestrial program, the receiver switches the reception according to the return information and resumes receiving the digital satellite program.

### (Construction of a Digital Broadcast Reception Apparatus)

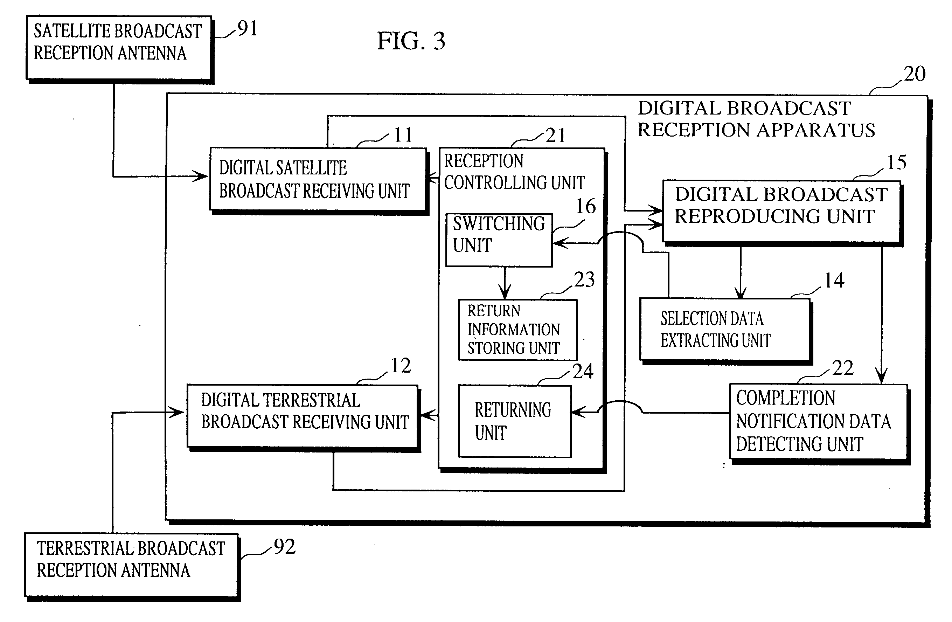

FIG. 3 is a diagrammatic sketch of a digital broadcast reception apparatus to which the second embodiment of the invention relates. In the drawing, construction elements that are the same as the construction elements of the digital broadcast reception apparatus 10 shown in FIG. 1 have been given the same reference numerals and their explanation has been omitted.

A digital broadcast reception apparatus 20 shown in FIG. 3 includes the digital satellite broadcast receiving unit 11, the digital terrestrial broadcast receiving unit 12, a reception controlling unit 21, the selection data extracting unit 14, a completion notification data detecting unit 22, and the digital broadcast reproducing unit 15.

The reception controlling unit 21 exercises control so that one of the digital satellite broadcast receiving unit 11 and the digital terrestrial broadcast receiving unit 12 receives program data and control data. The reception controlling unit 21 includes the switching unit 16, a return information storing unit 23, and a returning unit 24.

The completion notification data detecting unit 22 detects whether completion notification data for notifying of the completion of a digital terrestrial program such as local commercials or news is included in control data reproduced by the digital broadcast reproducing unit 15.

The return information storing unit 23 stores return information, before the switching unit 16 switches the reception from a digital satellite program to a digital terrestrial program. The return information is information for receiving the previously-received digital satellite program. As examples, the return information is an NIT which includes the program to be returned, a transponder number, and a PID of a PMT of the program to be returned.

The returning unit 24 controls the digital satellite broadcast receiving unit 11 and the digital terrestrial broadcast receiving unit 12 to switch the reception from the program and control data which are currently being received to the program and control data specified by the return information stored in the return information storing unit 23, when the completion notification data detecting unit 22 detects the completion notification data.

### (Reception Operation)

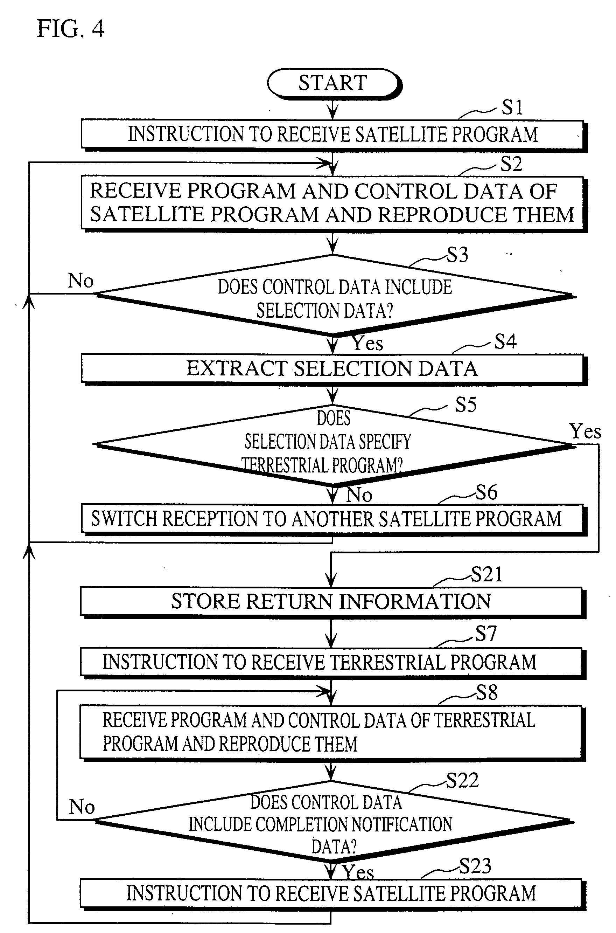

FIG. 4 is a flowchart showing a reception operation of the digital broadcast reception apparatus 20.

The reception operation is performed in the following way.

Here, it is assumed that when a digital satellite broadcast station wants the digital broadcast reception apparatus 20 to receive a digital terrestrial program such as local commercials or news while broadcasting a digital satellite program such as a national program, the digital satellite broadcast station multiplexes selection data for the digital terrestrial program with program data of the digital satellite program and broadcasts them. When the digital terrestrial program ends, the digital terrestrial broadcast station multiplexes completion notification data with program data of the digital terrestrial program and broadcasts them. Note that steps which are the same as those of the first embodiment shown in FIG. 2 have been given the same numbers.
(1) When the viewer selects a digital satellite program using a remote control or the like, the reception controlling unit 21 instructs the digital satellite broadcast receiving unit 11 to receive program data and control data of the digital satellite program (S1).
(2) The digital satellite broadcast receiving unit 11 receives the program data of the digital satellite program and the control data multiplexed with the program data. The digital broadcast reproducing unit 15 reproduces the digital satellite program, such as a national program, using the program data. The digital broadcast reproducing unit 15 also reproduces the control data (S2).
(3) The selection data extracting unit 14 judges whether selection data for receiving another program is included in the reproduced control data (S3). If not, the reception of the digital satellite program continues.
(4) If selection data is included, the selection data extracting unit 14 extracts the selection data (S4).
(5) A judgement is made whether the program specified by the extracted selection data is a digital satellite program or a digital terrestrial program (S5).
(6) In the case of a digital satellite program, the reception is switched to the digital satellite program specified by the selection data (S6).
(7) In the case of a digital terrestrial program, the return information storing unit 23 stores return information (S21).
(8) The switching unit 16 instructs the digital satellite broadcast receiving unit 11 to stop receiving the digital satellite program, and instructs the digital terrestrial broadcast receiving unit 12 to receive the digital terrestrial program specified by the selection data (S7).
(9) The digital terrestrial broadcast receiving unit 12 receives program data of the digital terrestrial program and control data multiplexed with the program data. The digital broadcast reproducing unit 15 reproduces the digital terrestrial program, such as local commercials or news, using the program data. The digital broadcast reproducing unit 15 also reproduces the control data (S8).
(10) The completion notification data detecting unit 22 detects whether completion notification data indicating the completion of the digital terrestrial program is included in the reproduced control data (S22). If not, the reception of the digital terrestrial program continues.
(11) If the completion notification data is included, the returning unit 24 instructs the digital terrestrial broadcast receiving unit 12 to stop receiving the digital terrestrial program, and instructs the digital satellite broadcast receiving unit 11 to receive the digital satellite program specified by the return information stored in the return information storing unit 23 (S23).

### (Conclusion)

According to the second embodiment of the invention, the reception can be switched from a digital satellite program to a digital terrestrial program by receiving selection data, and switched from the digital terrestrial program back to the digital satellite program by receiving completion notification data. This makes it possible to receive national programs from digital satellite broadcasting and also receive local commercials or news from digital terrestrial broadcasting.

### Third Embodiment

### (Overview)

The third embodiment of the present invention is the following. When a digital satellite broadcast station broadcasting a digital satellite program wants a receiver to receive a digital terrestrial program such as local commercials or news at some midpoint of the digital satellite program, the digital satellite broadcast station multiplexes selection data for the digital terrestrial program with program data of the digital satellite program and broadcasts them. Upon receiving the selection data for the digital terrestrial program while receiving the digital satellite program, the receiver stores return information for returning to the digital satellite program, before switching the reception according to the selection data and receiving the digital terrestrial program. When a timer counts to a return time, the receiver switches the reception according to the return information and resumes receiving the digital satellite program.

### (Construction of a Digital Broadcast Reception Apparatus)

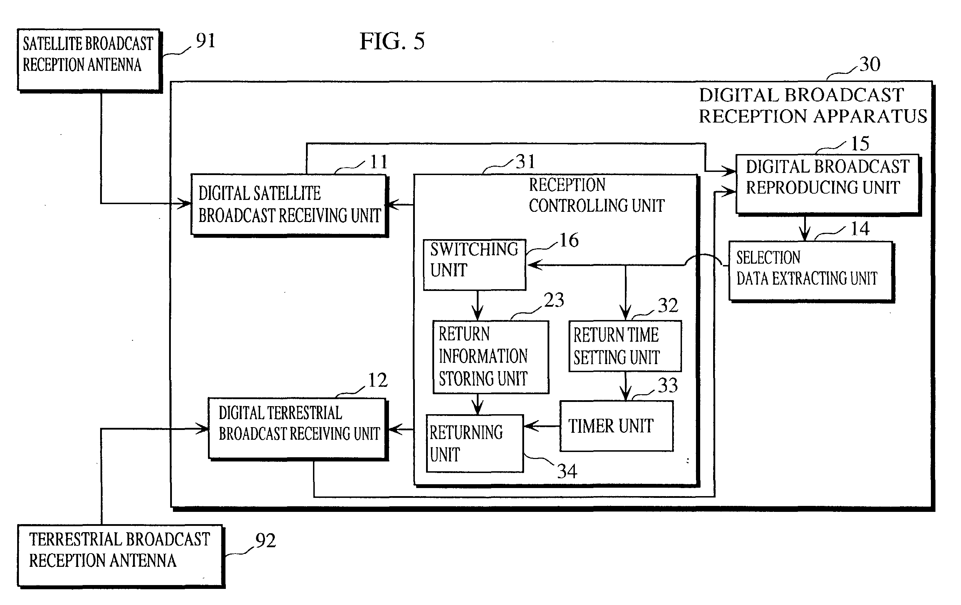

FIG. 5 is a diagrammatic sketch of a digital broadcast reception apparatus to which the third embodiment of the invention relates. Construction elements which are the same as the construction elements of the digital broadcast reception apparatus 20 shown in FIG. 3 have been given the same reference numerals and their explanation has been omitted.

A digital broadcast reception apparatus 30 shown in FIG. 5 includes the digital satellite broadcast receiving unit 11, the digital terrestrial broadcast receiving unit 12, a reception controlling unit 31, the selection data extracting unit 14, and the digital broadcast reproducing unit 15.

Here, selection data extracted by the selection data extracting unit 14 is assumed to include information showing a return time from when the reception is switched from a digital satellite program to a digital terrestrial program to when the reception is switched back to the previously-received digital satellite program.

The reception controlling unit 31 exercises control so that one of the digital satellite broadcast receiving unit 11 and the digital terrestrial broadcast receiving unit 12 receives program data and control data. The reception controlling unit 31 includes the switching unit 16, the return information storing unit 23, a return time setting unit 32, a timer unit 33, and a returning unit 34.

The return time setting unit 32 sets the return time included in the selection data extracted by the selection data extracting unit 14, to the timer unit 33. The return time is a time period from when the reception is switched from one program to another to when the reception is switched back to the former program. In the case of a commercial, a return time may be 15 seconds, 30 seconds, 1 minute, or 1.5 minutes. In the case of local news, a return time may be about five minutes to several tens of minutes.

The timer unit 33 counts the return time set by the return time setting unit 32, once the reception has been switched by the switching unit 16.

The returning unit 34 controls the digital satellite broadcast receiving unit 11 and the digital terrestrial broadcast receiving unit 12 to switch the reception from the program and control data which are currently being received to the program and control data specified by the return information stored in the return information storing unit 23, when the timer unit 33 counts to the return time.

### (Reception Operation)

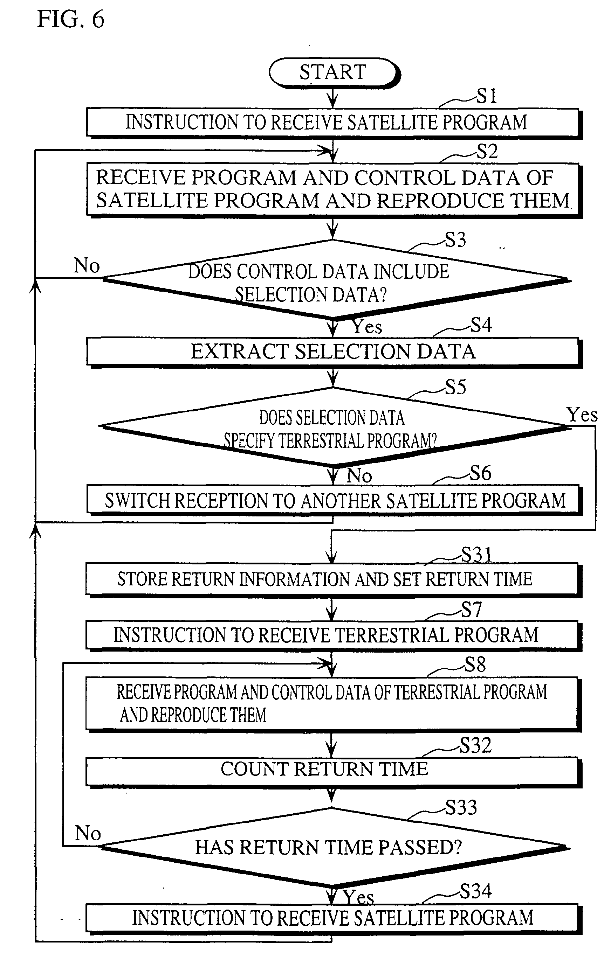

FIG. 6 is a flowchart showing a reception operation of the digital broadcast reception apparatus 30 according to the third embodiment.

The reception operation is performed in the following manner.

Here, it is assumed that when a digital satellite broadcast station wants the digital broadcast reception apparatus 30 to receive a digital terrestrial program such as local commercials or news while broadcasting a digital satellite program such as a national program, the digital satellite broadcast station multiplexes selection data for the digital terrestrial program with program data of the digital satellite program and broadcasts them, where the selection data includes information about a return time. Note that steps which are the same as those of the first embodiment shown in FIG. 2 have been given the same numbers.
(1) When the viewer selects a digital satellite program using a remote control or the like, the reception controlling unit 31 instructs the digital satellite broadcast receiving unit 11 to receive program data and control data of the digital satellite program (S1).
(2) The digital satellite broadcast receiving unit 11 receives the program data of the digital satellite program and the control data multiplexed with the program data. The digital broadcast reproducing unit 15 reproduces the digital satellite program, such as a national program, using the program data. The digital broadcast reproducing unit 15 also reproduces the control data (S2).
(3) The selection data extracting unit 14 judges whether selection data for receiving another program is included in the reproduced control data (S3). If not, the reception of the digital satellite program continues.
(4) If selection data is included, the selection data extracting unit 14 extracts the selection data (S4).
(5) A judgement is made whether the program specified by the extracted selection data is a digital satellite program or a digital terrestrial program (S5).
(6) In the case of a digital satellite program, the reception is switched to the digital satellite program specified by the selection data (S6).
(7) In the case of a digital terrestrial program, the return information storing unit 23 stores return information, and the return time setting unit 32 sets the return time in the timer unit 33 (S31).
(8) The switching unit 16 instructs the digital satellite broadcast receiving unit 11 to stop receiving the digital satellite program, and instructs the digital terrestrial broadcast receiving unit 12 to receive the digital terrestrial program specified by the selection data (S7).
(9) The digital terrestrial broadcast receiving unit 12 receives program data of the digital terrestrial program and control data multiplexed with the program data. The digital broadcast reproducing unit 15 reproduces the digital terrestrial program, such as local commercials or news, using the program data. The digital broadcast reproducing unit 15 also reproduces the control data (S8).
(10) The timer unit 33 starts counting the return time set by the return time setting unit 32, once the reception has been switched by the switching unit 16 (S32).
(11) Until the timer unit 33 reaches the return time (S33), the reception of the digital terrestrial program continues.
(12) When the timer unit 33 reaches the return time, the returning unit 34 instructs the digital terrestrial broadcast receiving unit 12 to stop receiving the digital terrestrial program, and instructs the digital satellite broadcast receiving unit 11 to receive the digital satellite program specified by the return information stored by the return information storing unit 23 (S34).

### (Conclusion)

According to the third embodiment of the invention, the reception can be switched from a digital satellite program to a digital terrestrial program by receiving selection data, and switched from the digital terrestrial program back to the digital satellite program by counting a return time using a timer. This makes it possible to receive national programs from digital satellite broadcasting and also receive local commercials or news from digital terrestrial broadcasting.

Though a return time is set in the third embodiment, a predetermined period may be given beforehand instead of setting a return time.

### Modifications to the First to Third Embodiments

The range reached by airwaves of terrestrial broadcasting is much narrower than satellite broadcasting. In other words, terrestrial broadcasting enables different commercials or news to be broadcast in different geographical areas, using the same channel and timeslot. Also, if a minimum of three terrestrial broadcasting channels are used to prevent these geographical areas from overlapping, all broadcast areas of the terrestrial broadcasting, however small they are, can be covered completely.

The first to third embodiments describe the case where the same broadcast format is used in digital satellite broadcasting and digital terrestrial broadcasting. However, if their broadcast formats are different, the digital broadcast reception apparatus need be equipped with a selection data extracting unit and a digital broadcast reproducing unit for each of the digital satellite and terrestrial broadcasting.

Also, specific procedures that comply with the MPEG standards are necessary in the actual reception operation, though they are not related to the subject matter of the present invention and so are not described in this specification.

The first to third embodiments describe an example where the reception is switched between digital satellite broadcasting and digital terrestrial broadcasting, but the invention is not limited to such so long as a geographical area covered by one broadcast is a part of a geographical area covered by the other broadcast. For example, shortwave broadcasting may be used as broadcasting covering a wide geographical area. Alternatively, broadcast services of different broadcast outputs may be used.

The invention is also applicable to analog broadcasting. Especially in the third embodiment where the digital terrestrial broadcast receiving unit 12 does not need to receive control data, there is no need to limit the invention to digital broadcasting.

### Fourth Embodiment

### (Overview)

The fourth embodiment of the invention is similar to the first embodiment. The difference lies in that in the fourth embodiment the reception is switched between digital broadcasting and internet broadcasting, whereas in the first embodiment the reception is switched between digital satellite broadcasting and digital terrestrial broadcasting.

### (Construction of a Digital Broadcast Reception Apparatus)

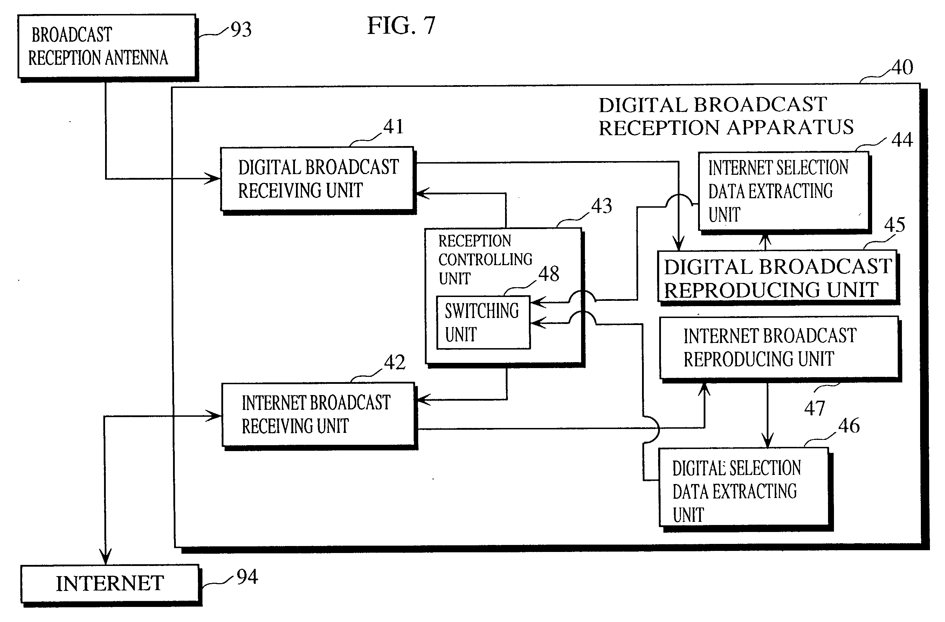

FIG. 7 is a diagrammatic sketch of a digital broadcast reception apparatus to which the fourth embodiment of the invention relates.

A digital broadcast reception apparatus 40 shown in FIG. 7 includes a digital broadcast receiving unit 41, an internet broadcast receiving unit 42, a reception controlling unit 43, an internet selection data extracting unit 44, a digital broadcast reproducing unit 45, a digital selection data extracting unit 46, and an internet broadcast reproducing unit 47.

The drawing also shows a broadcast reception antenna 93 and the Internet 94.

The digital broadcast receiving unit 41 receives program data of a digital satellite or terrestrial program and control data multiplexed with the program data. In more detail, the digital broadcast receiving unit 41 includes a tuner which selects a carrier wave of the digital program and a demodulator which demodulates the carrier wave to recover an original signal wave. The digital broadcast receiving unit 41 generates a transport stream that is made up of packets of the program and control data of the digital program.

The internet broadcast receiving unit 42 receives an internet program. In more detail, the internet broadcast receiving unit 42 indicates a URL (uniform resource locator) and receives program and control data of an internet program from a specific site.

Internet broadcasting denotes simultaneous transmission of the same information, such as moving image information, to a plurality of internet terminals via the Internet. Though the term "broadcasting" is used in this specification, in the strict sense internet broadcasting does not "broadcast" a program but rather "transmits" it.

While typical television broadcasting simultaneously broadcasts the same information to an indefinite number of terminals one-sidedly, internet broadcasting transmits the same information only to terminals which have requested the information. One commonality between the two systems is their capability of one-to-many transmission where the same information is transmitted to a plurality of terminals.

The reception controlling unit 43 controls one of the digital broadcast receiving unit 41 and the internet broadcast receiving unit 42 to receive program data and control data. The reception controlling unit 43 includes a switching unit 48.

The internet selection data extracting unit 44 performs the following operation. When internet selection data for selecting an internet program is included in control data reproduced by the digital broadcast reproducing unit 45, the internet selection data extracting unit 44 extracts the internet selection data. The internet selection data includes a plurality of pairs of transmitter information and characteristics information which are in a one-to-one correspondence with a plurality of internet programs. The transmitter information is, for instance, a URL of a site that provides an internet program. The characteristics information shows characteristics of viewers or broadcast program reception apparatuses that should receive the internet program, and is used to specify which viewers or broadcast reception apparatuses should receive this internet program. In this embodiment, the internet selection data is assumed to include a pair of a URL "http://golf.html" and characteristics information "golf", a pair of a URL "http://baseball.html" and characteristics information "baseball", and a pair of a URL "http://other.html" and characteristics information "others".

The digital broadcast reproducing unit 45 reproduces a digital program, using the program data received by the digital broadcast receiving unit 41 under the control of the reception controlling unit 43. The digital broadcast reproducing unit 45 also reproduces the control data multiplexed with the program data. In detail, the digital broadcast reproducing unit 45 is equipped with a TS decoder and an audio-visual decoder. The TS decoder decodes a transport stream and reproduces audio and video MPEG streams and control data. The audio-visual decoder decodes the audio and video MPEG streams and reproduces audio and video.

The digital selection data extracting unit 46 performs the following operation. When digital selection data for selecting a digital program is included in control data reproduced by the internet broadcast reproducing unit 47, the digital selection data extracting unit 46 extracts the digital selection data. As examples, the digital selection data is a NIT which includes the program to be selected, a transponder number, and a PID of a PMT of the program to be selected.

The internet broadcast reproducing unit 47 reproduces an internet program, using the program data received by the internet broadcast receiving unit 42 under the control of the reception controlling unit 43. The internet broadcast reproducing unit 47 also reproduces the control data multiplexed with the program data. The reproduction is carried out in the same way as when an internet terminal views a homepage described in HTML (hypertext markup language) to which a moving image file is attached, or when a transport stream is received and processed as in the case of digital broadcasting.

The switching unit 48 controls the digital broadcast receiving unit 41 and the internet broadcast receiving unit 42 to switch the reception from the program and control data which are currently being received to the program and control data specified by the internet selection data extracted by the internet selection data extracting unit 44 or digital selection data extracted by the digital selection data extracting unit 46.

The switching unit 48 stores characteristics information showing the characteristics of the digital broadcast reception apparatus 40 or its user. When the reception is switched from a digital program to an internet program specified by internet selection data, the switching unit 48 specifies a transmitter based on transmitter information which is paired with characteristics information, among the pairs of transmitter and characteristics information included in the internet selection data, that matches the stored characteristics information. The switching unit 48 then instructs the digital broadcast receiving unit 41 to stop receiving the digital program, and instructs the internet broadcast receiving unit 42 to start receiving the internet program from the specified transmitter.

Suppose the switching unit 48 stores the following characteristics information: "the favorite sport is baseball"; and "the reception area is Osaka". When the aforementioned internet selection data is extracted, the characteristics information "baseball" matches the characteristics information stored in the switching unit 48, so that the switching unit 48 instructs the internet broadcast receiving unit 42 to start receiving an internet program from the URL
"http://baseball.html".

### (Reception Operation)

A reception operation of the digital broadcast reception apparatus 40 is the same as that in the first embodiment, so that its explanation has been omitted.

### (Conclusion)

According to the fourth embodiment of the invention, the reception can be switched from a digital program to an internet program by receiving internet selection data, and switched from the internet program back to the digital program by receiving digital selection data. This makes it possible to receive programs from digital broadcasting which are broadcast nationwide or across a specific geographical area, and also receive commercials or news from internet broadcasting which are chosen for each individual viewer or broadcast program reception apparatus.

### Fifth Embodiment

### (Overview)

The fifth embodiment of the invention is similar to the second embodiment. The difference lies in that in the fifth embodiment the reception is switched between digital broadcasting and internet broadcasting, whereas in the second embodiment the reception is switched between digital satellite broadcasting and digital terrestrial broadcasting.

### (Construction of a Digital Broadcast Reception Apparatus)

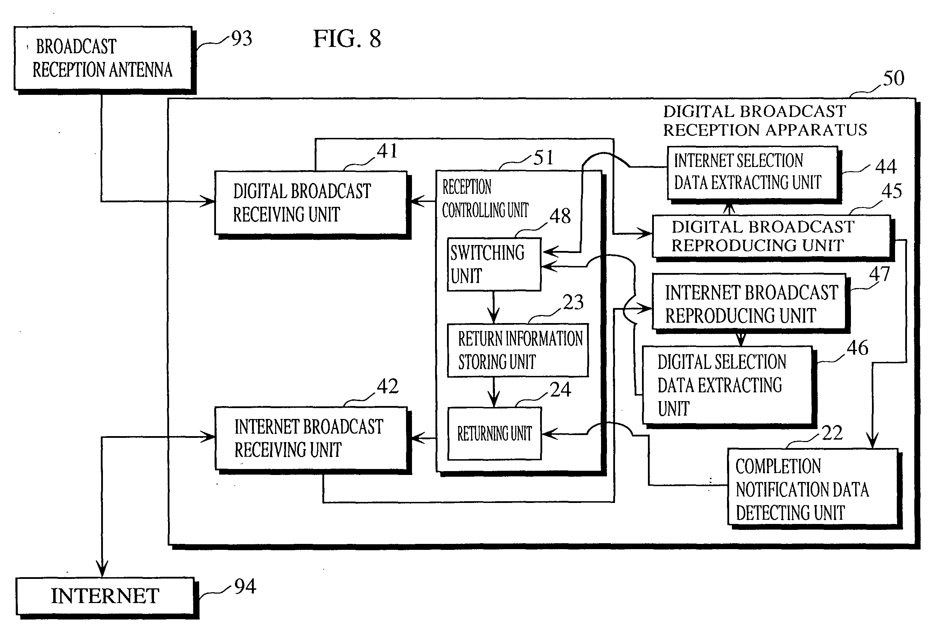

FIG. 8 is a diagrammatic sketch of a digital broadcast reception apparatus to which the fifth embodiment of the invention relates. Construction elements which are the same as those of the digital broadcast reception apparatuses 20 and 40 shown in FIGS. 3 and 7 have been given the same reference numerals and their explanation is omitted.

A digital broadcast reception apparatus 50 shown in FIG. 8 includes the digital broadcast receiving unit 41, the internet broadcast receiving unit 42, a reception controlling unit 51, the internet selection data extracting unit 44, the digital broadcast reproducing unit 45, the digital selection data extracting unit 46, the internet broadcast reproducing unit 47, and the completion notification data detecting unit 22.

The reception controlling unit 51 controls so that one of the digital broadcast receiving unit 41 and the internet broadcast receiving unit 42 receives program data and control data. The reception controlling unit 51 includes a switching unit 48, the return information storing unit 23, and the returning unit 24.

### (Reception Operation)

A reception operation of the digital broadcast reception apparatus 50 is the same as that of the second embodiment, so that its explanation has been omitted.

### (Conclusion)

According to the fifth embodiment of the invention, the reception can be switched from a digital program to an internet program by receiving internet selection data, and switched from the internet program back to the digital program by receiving completion notification data. This makes it possible to receive programs from digital broadcasting which are broadcast nationwide or across a specific geographical area, and also receive commercials or news from internet broadcasting which are chosen for each individual viewer or broadcast program reception apparatus.

### Sixth Embodiment

### (Overview)

The sixth embodiment of the invention is similar to the third embodiment. The difference lies in that in the sixth embodiment the reception is switched between digital broadcasting and internet broadcasting, whereas in the third embodiment the reception is switched between digital satellite broadcasting and digital terrestrial broadcasting.

### (Construction of a Digital Broadcast Reception Apparatus)

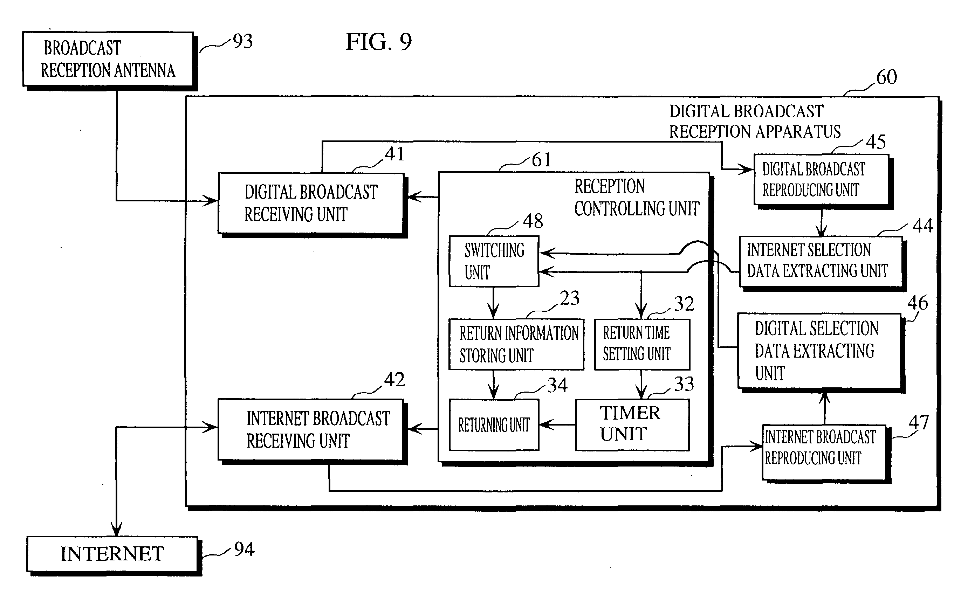

FIG. 9 is a diagrammatic sketch of a digital broadcast reception apparatus to which the sixth embodiment of the invention relates. Construction elements which are the same as those of the digital broadcast reception apparatuses 30 and 40 shown in FIGS. 5 and 7 have been given the same reference numerals and their explanation has been omitted.

A digital broadcast reception apparatus 60 shown in FIG. 9 includes the digital broadcast receiving unit 41, the internet broadcast receiving unit 42, a reception controlling unit 61, the internet selection data extracting unit 44, the digital broadcast reproducing unit 45, the digital selection data extracting unit 46, and the internet broadcast reproducing unit 47.

Here, internet selection data extracted by the internet selection data extracting unit 44 is assumed to include information showing a return time from when the reception is switched from a digital program to an internet program to when the reception is switched back to the previously-received digital program.

The reception controlling unit 61 controls so that one of the digital broadcast receiving unit 41 and the internet broadcast receiving unit 42 receives program data and control data. The reception controlling unit 61 includes the switching unit 48, the return information storing unit 23, the return time setting unit 32, the timer unit 33, and the returning unit 34.

### (Reception Operation)

A reception operation of the digital broadcast reception apparatus 60 is the same as that in the third embodiment and so its explanation has been omitted here.

### (Conclusion)

According to the sixth embodiment of the invention, the reception can be switched from a digital program to an internet program by receiving internet selection data, and switched from the internet program back to the digital program by counting a return time using a timer. This makes it possible to receive programs from digital broadcasting which are broadcast nationwide or across a specific geographical area, and also receive commercials or news from internet broadcasting which are chosen for each individual viewer or broadcast program reception apparatus.

Although a return time is set in the sixth embodiment, a predetermined time may be given in advance instead of setting a return time.

### Modifications to the Fourth to Sixth Embodiments

The fourth to sixth embodiments describe the case where digital broadcasting and internet broadcasting have different broadcast formats, but their broadcast formats may be the same. In such a case, the digital broadcast reception apparatus need be equipped with only one selection data extracting unit and one reproducing unit.

The fourth to sixth embodiments describe an example where the reception is switched between digital broadcasting and internet broadcasting, but the invention is not limited to such so long as a receiver group targeted by one broadcast is a part of a receiver group targeted by the other broadcast.

Although the present invention has been fully described by way of examples with reference to the accompanying drawings, it is to be noted that various changes and modifications will be apparent to those skilled in the art.

Therefore, unless such changes and modifications depart from the scope of the present invention, they should be construed as being included therein.

## Claims

1. A program reception apparatus for receiving and reproducing programs, comprising:
first receiving means for receiving programs which are sent via a first transmission path to a receiver group made up of a plurality of program reception apparatuses;
second receiving means for receiving programs which are sent via a second transmission path different with the first transmission path to a part of the receiver group, wherein a program received by at least one of the first and second receiving means is accompanied, at a predetermined timing, with switch information for specifying a program to be received by a different one of the first and second receiving means;
controlling means for controlling reception so that one of the first and second receiving means receives a program at one time, the program hereafter referred to as a first program; and
extracting means for extracting, when the first program is accompanied with the switch information, the switch information,
wherein the controlling means includes:
switching means for switching, when the switch information is extracted by the extracting means, the reception from the first program to a second program specified by the extracted switch information.

2. The program reception apparatus of Claim 1,
wherein the controlling means further includes:
acquiring means for acquiring return information for specifying the first program, before the reception is switched from the first program to the second program; and
returning means for switching, when the received second program is accompanied with a return signal, the reception from the second program back to the first program specified by the return information.

3. The program reception apparatus of Claim 1,
wherein the controlling means further includes:
acquiring means for acquiring return information for specifying the first program, before the reception is switched from the first program to the second program;
counting means for counting a predetermined time which elapses since the reception is switched from the first program to the second program; and
returning means for switching, when the predetermined time has elapsed, the reception from the second program back to the first program specified by the return information.

4. The program reception apparatus of Claim 1,
wherein the switch information includes a return time which is a time period from when the reception is switched from the first program to the second program to when the reception is switched from the second program back to the first program, and
the controlling means further includes:
acquiring means for acquiring return information for specifying the first program, before the reception is switched from the first program to the second program;
counting means for counting the return time which elapses since the reception is switched from the first program to the second program; and
returning means for switching, when the return time has elapsed, the reception from the second program back to the first program specified by the return information.

5. The program reception apparatus of Claim 1,
wherein the first receiving means receives a program which is broadcast to the plurality of program reception apparatuses located in a predetermined geographical area, and
the second receiving means receives a program which is broadcast to at least one of the plurality of program reception apparatuses located in a part of the predetermined geographical area.

6. The program reception apparatus of Claim 5,
wherein the first receiving means receives a satellite broadcast program, and
the second receiving means receives a non-satellite broadcast program.

7. The program reception apparatus of Claim 6,
wherein the switching means switches the reception from the satellite broadcast program to the non-satellite broadcast program.

8. The program reception apparatus of Claim 5,
wherein the first receiving means receives a main program which is broadcast across the predetermined geographical area, and
the second receiving means receives a commercial or news which is broadcast to only the part of the predetermined geographical area.

9. The program reception apparatus of Claim 8,
wherein the switching means switches the reception from the main program to the commercial or news.

10. The program reception apparatus of Claim 1,
wherein the controlling means controls the first receiving means to receive the first program which is accompanied with the switch information, the switch information including pairs of transmitter information and characteristics information which are in a one-to-one correspondence with the programs that can be received by the second receiving means, the transmitter information showing a transmitter of a program, and the characteristics information showing characteristics of users or program reception apparatuses that should receive the program,
the extracting means extracts the switch information accompanying the first program, and
the switching means includes:
characteristics information storing means for storing characteristics information showing characteristics of the program reception apparatus or a user of the program reception apparatus;
transmitter specifying means for specifying a transmitter, based on transmitter information which is paired with characteristics information, among the pairs of transmitter information and characteristics information included in the extracted switch information, that matches the characteristics information stored in the characteristics information storing means; and
switch executing means for instructing the first receiving means to stop receiving the first program, and instructing the second receiving means to receive a program from the specified transmitter as the second program.

11. The program reception apparatus of Claim 10,
wherein the first receiving means receives a television program which is broadcast one-sidedly to unspecified program reception apparatuses, and
the second receiving means receives an internet program which is transmitted to only program reception apparatuses which have requested the internet program.

12. The program reception apparatus of Claim 11,
wherein the switching means switches the reception from the television program to the internet program.

13. The program reception apparatus of Claim 10,
wherein the first receiving means receives a main program which is broadcast across a predetermined geographical area, and
the second receiving means receives a commercial or news which is broadcast to only a part of the predetermined geographical area.

14. The program reception apparatus of Claim 13,
wherein the switching means switches the reception from the main program to the commercial or news.

15. A method used in a program reception apparatus for receiving and reproducing programs, comprising:
a first receiving step for receiving programs which are sent via a first transmission path to a receiver group made up of a plurality of program reception apparatuses;
a second receiving step for receiving programs which are sent via a second transmission path different with the first transmission path to a part of the receiver group, wherein a program received by at least one of the first and second receiving steps is accompanied, at a predetermined timing, with switch information for specifying a program to be received by a different one of the first and second receiving steps;
a controlling step for controlling reception so that one of the first and second receiving steps receives a program at one time, the program hereafter referred to as a first program; and
an extracting step for extracting, when the first program is accompanied with the switch information, the switch information,
wherein the controlling step includes:
a switching step for switching, when the switch information is extracted by the extracting step, the reception from the first program to a second program specified by the extracted switch information.

16. A computer program used in a program reception apparatus for receiving and reproducing programs, comprising:
a first receiving step for receiving programs which are sent via a first transmission path to a receiver group made up of a plurality of program reception apparatuses;
a second receiving step for receiving programs which are sent via a second transmission path different with the first transmission path to a part of the receiver group, wherein a program received by at least one of the first and second receiving steps is accompanied, at a predetermined timing, with switch information for specifying a program to be received by a different one of the first and second receiving steps;
a controlling step for controlling reception so that one of the first and second receiving steps receives a program at one time, the program hereafter referred to as a first program; and
an extracting step for extracting, when the first program is accompanied with the switch information, the switch information,
wherein the controlling step includes:
a switching step for switching, when the switch information is extracted by the extracting step, the reception from the first program to a second program specified by the extracted switch information.
